# EUROPEAN PATENT APPLICATION

(11) **EP 4 520 449 A1**
(43) Date of publication of application: **12.03.2025**
(21) Application number: 24813089.0
(22) Date of filing: 03.07.2024
(51) Int. Cl.: B07C 5/34

(54) **AUTOMATIC FOREIGN BODY INSPECTION MACHINE FOR SOFT BAGS**

(30) Priority: 18.07.2023 CN 202310875356
(71) Applicant: Hunan Zhengzhong Pharmaceutical Machinery Co., Ltd, Changsha, Hunan 410221 (CN)
(72) Inventor: The designation of the inventor has not yet been filed
(74) Representative: Grünecker Patent- und Rechtsanwälte PartG mbB
(86) International application number: PCT/CN2024/103360
(87) International publication number: WO 2025/016204

(57) **Abstract**

Disclosed is an automatic inspection machine for foreign matters in a soft bag, including a base, a bag sorting mechanism, and an inspection mechanism, where the base is provided with a bag loading mechanism for loading a to-be-inspected soft bag, a bag placement platform for temporarily storing the to-be-inspected soft bag, and a defective bag removal mechanism is configured to discharge an inspected soft bag; the bag sorting mechanism is arranged on the base for gripping and placing the to-be-inspected soft bag on the bag placement platform; the inspection mechanism is arranged on the base, and includes a soft bag transfer assembly configured to transfer the to-be-inspected soft bag from the bag placement platform to a bag clamping inspection assembly, and the bag clamping inspection assembly is configured to clamp and rotate the to-be-inspected soft bag for inspection, and convey the inspected soft bag to the defective bag removal mechanism.

## Description

### TECHNICAL FIELD

The present invention relates to the technical field of pharmaceutical inspection, and particularly relates to an automatic inspection machine for foreign matters in a soft bag.

### BACKGROUND

In the pharmaceutical industry, automatic foreign matter inspection machines (commonly known as light inspection machines) are essential quality inspection equipment used to inspect whether there is any foreign matter in a medicinal drug. When performing foreign matter inspection on liquid medicine, the liquid medicine to be inspected needs to be rotated at a high speed, and a container of the medicinal drug moves, causing the liquid medicine to continue rotating under the action of inertia, sequential images are then taken at the high speed, and trajectory changes of foreign matters in the sequential images are compared to determine whether there is any foreign matter in the liquid medicine.

A soft medical infusion bag is used to store the liquid medicine, but foreign matters with small particle sizes, such as aluminum chips, glass shards, rubber chips, fibers, or insoluble drug residues, may be inadvertently mixed into a finished infusion product due to production environment or manufacturing process, or for other reasons. During the course of intravenous infusion, the foreign matters may enter a human body along with the liquid medicine, potentially causing vascular blockage and severely affecting life and health of a patient. Therefore, it is necessary to inspect foreign matters in the liquid medicine inside the soft infusion bag during the production of finished infusion product. However, since the soft bag is not solid in shape and is easy to deform, deformation characteristics of the soft bag need to be considered for bag sorting, bag loading, bag rotating, and removal of a bag with foreign matters during the light inspection.

The Chinese Patent Application No. CN201710418969.4 discloses a fully automatic device for inspecting foreign matters in a soft infusion bag. During the bag loading process, the soft infusion bag needs to be parallel to a movement direction of a conveyor belt, without any deviation in left and right positions; the soft infusion bag is then flipped to a hook of a synchronous belt via a flipping mechanism, and then conveyed to a bag rotating mechanism. During the conveying via the synchronous belt, since a conveying direction of the synchronous belt on which the soft infusion bag is loaded is different from that of the synchronous belt, when the soft infusion bag is loaded on the synchronous belt, transfer of the soft infusion bag at synchronous belt wheels causes sharp changes in a speed in a bag direction and a speed in a conveying direction of the synchronous belt, resulting in violent shaking of the liquid medicine inside the soft infusion bag under the action of inertia, and accordingly leading to the formation of bubbles that can affect the inspection results. The Chinese Patent Application No. CN202211547240.4 uses two parallel manipulator arms for bag loading, and a soft bag is then transferred to a circular inspection mechanism. After being inspected, the soft bag directly drops into a mesh bag for collection. However, since the parallel manipulator arms are installed upside down, a huge and high supporting rack, which has a high center of gravity. Moreover, in order to keep the rack stable, the rack needs to be secured on a ground, it is very taboo for a pharmaceutical facility to damage the ground to secure the equipment. In addition, the parallel manipulator arms move very fast when the soft bag is loaded, which can easily cause the liquid medicine inside the soft bag shake violently and easily generate bubbles. When performing the inspection, a light inspection machine is easy to misidentify the bubbles inside the soft bag as foreign matters, thereby identifying conforming soft bags as non-conforming ones, and further affecting the accuracy of inspection results.

### SUMMARY

The present invention provides an automatic inspection machine for foreign matters in a soft bag, so as to solve the technical problem of how to reduce bubbles in the soft bag before foreign matter inspection and thus improve the accuracy of foreign matter inspection.

The automatic inspection machine for foreign matters in a soft bag provided in the present invention includes a base, a bag sorting mechanism, and an inspection mechanism; the base is provided with a bag loading mechanism for loading a to-be-inspected soft bag, a bag placement platform for temporarily storing the to-be-inspected soft bag, and a waste bag removal mechanism for discharging an inspected soft bag, and the waste bag removal mechanism is configured to differentiate the inspected soft bag, and then discharge a qualified soft bag and an unqualified soft bag through different routes; the bag sorting mechanism is arranged on the base and is configured to grab the to-be-inspected soft bag conveyed by the bag loading mechanism and place the same on the bag placement platform; the inspection mechanism is arranged on the base and includes a soft bag transfer assembly and a bag clamping inspection assembly, the soft bag transfer assembly is configured to transfer the to-be-inspected soft bag from the bag placement platform to the bag clamping inspection assembly, and the bag clamping inspection assembly is configured to clamp and rotate the to-be-inspected soft bag for inspection, and then convey the inspected soft bag to the waste bag removal mechanism.

Further, the bag loading mechanism is a load-end conveyor belt arranged in a length direction of the base, the bag placement platform is also arranged in the length direction of the base, and the load-end conveyor belt and the bag placement platform are arranged at intervals in a width direction of the base; the bag sorting mechanism includes a plurality of selective compliance articulated robot arms (SCARAs) arranged at intervals in the length direction of the base, the SCARAs are fixedly connected to the base and are located between the load-end conveyor belt and the bag placement platform, the SCARAs are configured to transfer the to-be-inspected soft bag conveyed on the load-end conveyor belt to the bag placement platform and to adjust a placement orientation of the to-be-inspected soft bag, such that a top of the to-be-inspected soft bag is oriented the bag clamping inspection assembly, and the soft bag transfer assembly can grab the to-be-inspected soft bag on the bag placement platform in a convenient manner. Further, the bag sorting mechanism further includes a plurality of vision inspectors, the vision inspectors are arranged at intervals in the length direction of the base and correspond to the SCARAs, the vision inspectors are configured to acquire position data of the to-be-inspected soft bag moving on the load-end conveyor belt and transmit the position data to the SCARAs, each of the SCARAs is provided with an encoder for detecting a conveying speed of the load-end conveyor belt, and the SCARAs grip the to-be-inspected soft bag on the load-end conveyor belt through the position data and place the to-be-inspected soft bag onto the bag placement platform.

Further, the soft bag transfer assembly includes a support frame fixedly connected to the base, a movable beam slidingly connected to the support frame, and a gripping assembly arranged on the movable beam for gripping the top of the to-be-inspected soft bag and moving the to-be-inspected soft bag vertically in a height direction of the base.

Further, the support frame includes translation rails arranged in the width direction of the base, the movable beam is installed on the translation rails, and the movable beam is driven by a transmission assembly to slide on translation rails in an adjustable manner; the transmission assembly includes a translation motor fixed on the support frame, a translation lead screw fixedly connected to an output shaft of the translation motor and a screw nut fixedly connected to the movable beam, the translation lead screw is in threaded connection with the screw nut and is rotationally connected to the support frame after penetrating through the connecting beam, such that the movable beam is driven by the translation motor to slide on the translation rails in the width direction of the base in an adjustable manner.

Further, the gripping assembly includes a lifting assembly arranged on the movable beam, a support plate connected to the lifting assembly, a flipping motor arranged on the support plate, a flipping shaft rotationally connected to the support plate, and a gripping member fixed on the flipping shaft, where the lifting assembly is configured to drive the support plate to move in the height direction of the base, the flipping motor is configured to drive the flipping shaft to rotate, such that the gripping member can flip around an axis of the flipping shaft, and the gripping member is configured to grip the top of the to-be-inspected soft bag.

Further, the lifting assembly includes a lifting motor fixed on the movable beam, and a lifting lead screw connected to an output shaft of the lifting motor, and the lifting lead screw is fixedly connected to the support plate, such that the support plate is driven to move in the height direction of the base when the lifting motor drives the lifting lead screw.

Further, a plurality of the gripping members are arranged, the plurality of the gripping members are arranged at intervals in a length of the flipping shaft, and the gripping members can be pneumatic grippers or electric grippers.

Further, the bag clamping inspection assembly includes a fixed clamping plate fixed on the base, a movable clamping plate slidingly connected to the base, and a drive assembly arranged on the base for pushing the movable clamping plate to move in the width direction of the base; a plurality of first turntables are rotationally connected to the fixed clamping plate, the first turntables are arranged at intervals in a length direction of the fixed clamping plate and driven by a rotating motor arranged on the fixed clamping plate, and a plurality of second turntables in one-to-one correspondence to the first turntables are rotationally connected to the movable clamping plate; when the movable clamping plate is driven by the drive assembly, the to-be-inspected soft bag is clamped between the first turntable and the second turntable, the rotating motor then drives the first turntables to rotate, such that the to-be-inspected soft bag clamped between the first turntable and the second turntable is rotated, and the rotating to-be-inspected soft bag can be then inspected.

Further, the defective bag removal mechanism includes a conforming product conveyor belt and a plurality of defective product conveyor belts, the defective product conveyor belts are arranged below the first turntables in the width direction of the base to receive the inspected soft bag, the plurality of defective product conveyor belts are arranged at intervals in one-to-one correspondence to the first turntables in the length direction of the base, the conforming product conveyor belt is arranged on the base and located below the defective product conveyor belts to discharge the conforming soft bag for collection, the defective product conveyor belts convey in a first direction to discharge the non-conforming soft bag for collection, and the defective product conveyor belts convey in a second reaction to discharge the conforming soft bag onto the conforming product conveyor belt.

The present invention has the following beneficial effects:
For the automatic inspection machine for foreign matters in a soft bag provided in the present invention, the bag sorting mechanism is provided to grab the to-be-inspected soft bag on the bag load mechanism and then move the to-be-inspected soft bag onto the bag placement platform for temporary storage, the to-be-inspected soft bag on the bag placement platform is then transferred to the bag clamping inspection assembly via the soft bag transfer assembly, the bag clamping inspection assembly clamps tightly and rotates the to-be-inspected soft bag for inspection, and finally conveys the inspected soft bag to the waste bag removal mechanism, the inspected soft bag is identified by the waste bag removal mechanism as a qualified soft bag or an unqualified soft bag for discharging through different routes. **In** this process, the to-be-inspected soft bag is temporarily stored on the bag placement platform, such that the to-be-inspected soft bag loaded by the bag loading mechanism can be temporarily stored and remain stationary before inspection, thereby avoiding the shaking of liquid medicine inside the to-be-inspected soft bag caused by sudden change of a conveying direction of the to-be-inspected soft bag under the action of inertia during a conveying process by the soft bag transfer assembly, and accordingly avoiding the formation of bubbles inside the to-be-inspected soft bag and improving the accuracy of inspection results.

**In** specific implementation, the bag loading mechanism conveys the to-be-inspected soft bag to a working range of the bag sorting mechanism, where the bag sorting mechanism includes a vision inspector and an SCARA; after the vision inspector takes pictures of the to-be-inspected soft bag moving on the bag loading mechanism to obtain a real-time position of the to-be-inspected soft bag, an encoder disposed on the SCARA is capable of obtaining a speed of the bag loading mechanism conveying the to-be-inspected soft bag, and the SCARA is capable of track and grab the to-be-inspected soft bag according to position data of the to-be-inspected soft bag and speed information of the bag loading mechanism; and after grabbing the to-be-inspected soft bag, the SCARA adjusts the position of the to-be-inspected soft bag, such that a top of the to-be-inspected soft bag is oriented the bag clamping inspection assembly. In the above process, the SCARA exhibits smooth movements when sorting materials, making a sorting material process gentle and avoiding the formation of bubbles. After grabbing the to-be-inspected soft bag, the SCARA places the same on the bag placement platform in required position and direction, the top of the to-be-inspected soft bag is exposed on the bag placement platform, the soft bag transfer assembly then grabs the top of the to-be-inspected soft bag, slowly lifts and moves the to-be-inspected soft bag to put the same into a position of the bag clamping inspection assembly, the bag clamping inspection assembly then tightly clamps the to-be-inspected soft bag, and the soft bag transfer assembly releases the to-be-inspected soft bag, and moves back to an initial position to wait for grabbing a next to-be-inspected soft bag. After tightly clamping the to-be-inspected soft bag, the bag clamping inspection assembly starts to rotate and inspect whether there is any foreign matter inside the to-be-inspected soft bag; after completing the inspection, the bag clamping inspection assembly releases, the soft bag has been inspected (the inspected soft bag) falls into the defective bag removal mechanism, and the inspected soft bag is finally identified by the defective bag removal mechanism as the conforming soft bag or the non-conforming soft bag for discharging through different routes.

In the above process, since the bag placement platform can temporary store the to-be-inspected soft bag, the to-be-inspected soft bag loaded by the bag loading mechanism can be temporarily stored and remain stationary before inspection, thereby avoiding the shaking of liquid medicine inside the to-be-inspected soft bag caused by sudden change of a conveying direction of the to-be-inspected soft bag under the action of inertia during a conveying process by the soft bag transfer assembly, and accordingly avoiding the formation of bubbles inside the to-be-inspected soft bag and improving the accuracy of inspection results of foreign matter. Moreover, the bag sorting mechanism is provided with the SCARA to sort materials, the SCARA exhibits smooth movements when sorting materials, making the sorting material process gentle and avoiding the formation of bubbles during the transfer of the to-be-inspected soft bag, thereby further improving the accuracy of inspection results of foreign matter.

In addition to those objectives, features and advantages described above, the present invention has other objects, features and advantages. The present invention will be further elaborated hereafter with reference to drawings.

### BRIEF DESCRIPTION OF THE DRAWINGS

The accompanying drawings forming a part of the present application serve to provide a further understanding of the present invention, and the illustrative embodiments of the present invention and the description of the illustrative embodiments serve to explain the present invention and are not to be construed as unduly limiting the present invention. In the drawings:
FIG. 1 is a structural schematic diagram of an automatic inspection machine for foreign matters in a soft bag according to a preferred embodiment of the present invention.
FIG. 2 is a structural schematic diagram of a soft bag transfer assembly according to a preferred embodiment of the present invention.
FIG. 3 is a structural schematic diagram of a gripping assembly according to a preferred embodiment of the present invention.
FIG. 4 is a structural schematic diagram of a bag clamping inspection assembly according to a preferred embodiment of the present invention.
FIG. 5 is a top view of a structure of a bag clamping inspection assembly according to a preferred embodiment of the present invention.

Reference numerals in the accompanying drawings:
100. base; 101. load-end conveyor belt; 102. bag placement platform; 103. defective product conveyor belt; 104. conforming product conveyor belt; 200. SCARA; 201. vision inspector; 300. support frame; 301. translation rail; 302. movable beam; 303. translation motor; 304. translation lead screw; and 305. screw nut; 400. gripping assembly; 401. support plate; 402. flipping motor; 403. flipping shaft; 404. gripping member; 405. sliding rail; 406. sliding rod; 407. lifting motor; 408. lifting lead screw; 500. bag clamping inspection assembly; 501. fixed clamping plate; 502. first turntable; 503. guide rail; 504. driving motor; 505. movable clamping plate; 506. second turntable; and 507. rotating motor.

### DETAILED DESCRIPTION OF EMBODIMENTS

Embodiments of the present invention will now be described in detail in combination with the accompanying drawings, but the present invention may be embodied in a number of different ways as defined and covered by various implementation modes.

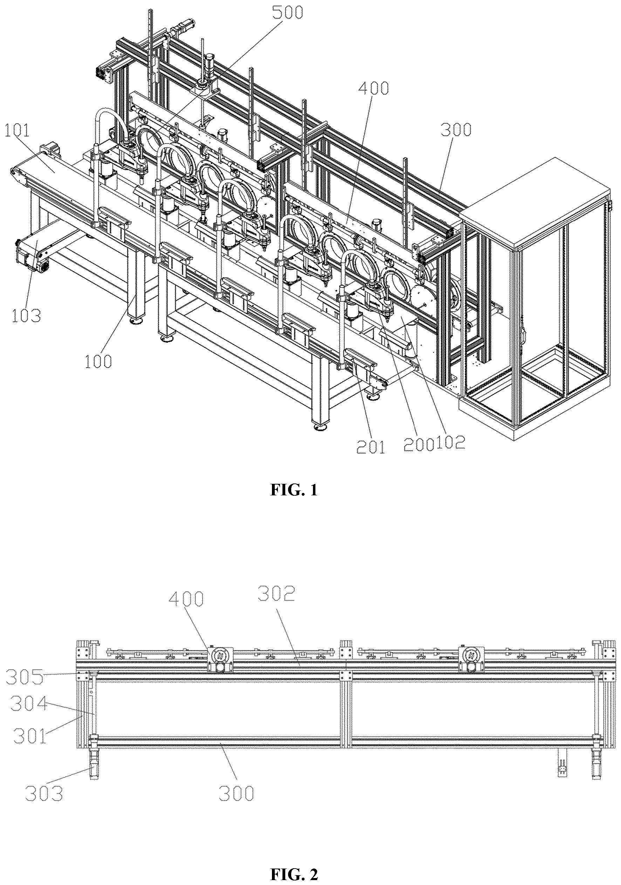

As shown in FIG. 1, this example an automatic inspection machine for foreign matters in a soft bag, including a base 100, a bag sorting mechanism, and an inspection mechanism; the base 100 is provided with a bag loading mechanism for loading a to-be-inspected soft bag, a bag placement platform 102 for temporarily storing the to-be-inspected soft bag, and a defective bag removal mechanism for discharging an inspected soft bag, and the defective bag removal mechanism is configured to differentiate the inspected soft bag, and then discharge a conforming soft bag and a non-conforming soft bag through different routes; the bag sorting mechanism is arranged on the base 100 and is configured to grip the to-be-inspected soft bag conveyed by the bag loading mechanism and place the same on the bag placement platform 102; the inspection mechanism is arranged on the base 100 and includes a soft bag transfer assembly and a bag clamping inspection assembly 500, the soft bag transfer assembly is configured to transfer the to-be-inspected soft bag from the bag placement platform 102 to the bag clamping inspection assembly 500, and the bag clamping inspection assembly 500 is configured to clamp and rotate the to-be-inspected soft bag for inspection, and then convey the inspected soft bag to the defective bag removal mechanism.

In this example, the bag sorting mechanism is provided to grip the to-be-inspected soft bag on the bag load mechanism and then move the to-be-inspected soft bag onto the bag placement platform 102 for temporary storage, the to-be-inspected soft bag on the bag placement platform 102 is then transferred to the bag clamping inspection assembly 500 via the soft bag transfer assembly, the bag clamping inspection assembly 500 clamps tightly and rotates the to-be-inspected soft bag for inspection, and finally conveys the inspected soft bag to the defective bag removal mechanism, the inspected soft bag is identified by the defective bag removal mechanism as the conforming soft bag or a non-conforming soft bag for discharging through different routes. In this process, the to-be-inspected soft bag is temporarily stored on the bag placement platform 102, such that the to-be-inspected soft bag loaded by the bag loading mechanism can be temporarily stored and remain stationary before inspection, thereby avoiding the shaking of liquid medicine inside the to-be-inspected soft bag caused by sudden change of a conveying direction of the to-be-inspected soft bag under the action of inertia during a conveying process by the soft bag transfer assembly, and accordingly avoiding the formation of bubbles inside the to-be-inspected soft bag and improving the accuracy of inspection results. Furthermore, the bag sorting mechanism features smooth conveying, and is capable of smoothly moving, garbing and placing the to-be-inspected soft bag gently, thereby avoiding the shaking, flipping, and collision of the to-be-inspected soft bag, and avoiding the formation of bubbles inside the to-be-inspected soft bag.

In specific implementation, the bag loading mechanism conveys the to-be-inspected soft bag to a working range of the bag sorting mechanism, where the bag sorting mechanism includes a vision inspector 201 and a selective compliance articulated robot arm (SCARA) 200; after the vision inspector 201 takes pictures of the to-be-inspected soft bag moving on the bag loading mechanism to obtain a real-time position of the to-be-inspected soft bag, an encoder disposed on the SCARA 200 is capable of obtaining a speed of the bag loading mechanism conveying the to-be-inspected soft bag, and the SCARA 200 is capable of tracking and gripping the to-be-inspected soft bag according to position data of the to-be-inspected soft bag and speed information of the bag loading mechanism; and after gripping the to-be-inspected soft bag, the SCARA 200 adjusts the position of the to-be-inspected soft bag, such that a top of the to-be-inspected soft bag is oriented the bag clamping inspection assembly 500. In the above process, the SCARA 200 exhibits smooth movements when sorting materials, making a sorting material process gentle and avoiding the formation of bubbles. After gripping the to-be-inspected soft bag, the SCARA 200 places the same on the bag placement platform 102 in required position and direction, the top of the to-be-inspected soft bag is exposed on the bag placement platform 102, the soft bag transfer assembly then grips the top of the to-be-inspected soft bag, slowly lifts and moves the to-be-inspected soft bag to put the same into a position of the bag clamping inspection assembly 500, the bag clamping inspection assembly 500 then tightly clamps the to-be-inspected soft bag, and the soft bag transfer assembly releases the to-be-inspected soft bag, and moves back to an initial position to wait for gripping a next to-be-inspected soft bag. After tightly clamping the to-be-inspected soft bag, the bag clamping inspection assembly 500 starts to rotate and inspect whether there is any foreign matter inside the to-be-inspected soft bag; after completing the inspection, the bag clamping inspection assembly 500 releases, the soft bag has been inspected (the inspected soft bag) falls into the defective bag removal mechanism, and the inspected soft bag is finally identified by the defective bag removal mechanism as the conforming soft bag or the non-conforming soft bag for discharging through different routes.

The SCARA 200, standing for selective compliance articulated robot arm, refers to a special type of industrial robot with a cylindrical coordinate. The SCARA 200 has a total of three joints, two of which are revolute joints, whose axes are parallel to each other, allowing for positioning and orientation in a plane. The other joint is a prismatic joint and is configured to complete movements of an end member perpendicular to a plane. A position of a wrist reference point of the SCARA 200 is determined by angular displacements γ1 and γ2 of the two revolute joints, and a displacement Z of the prismatic joint, that is, p = f (γ1, γ2, Z). Having a light structure and a fast response, this type of robot is most suitable for planar positioning and assembly task in a vertical direction.

In the above process, since the bag placement platform 102 can temporary store the to-be-inspected soft bag, the to-be-inspected soft bag loaded by the bag loading mechanism can be temporarily stored and remain stationary before inspection, thereby avoiding the shaking of liquid medicine inside the to-be-inspected soft bag caused by sudden change of a conveying direction of the to-be-inspected soft bag under the action of inertia during a conveying process by the soft bag transfer assembly, and accordingly avoiding the formation of bubbles inside the to-be-inspected soft bag and improving the accuracy of inspection results of foreign matter. Moreover, the bag sorting mechanism is provided with the SCARA 200 to sort materials, the SCARA 200 exhibits smooth movements when sorting materials, making the sorting material process gentle and avoiding the formation of bubbles during the transfer of the to-be-inspected soft bag, thereby further improving the accuracy of inspection results of foreign matter. Further, the bag loading mechanism is a load-end conveyor belt 101 arranged in a length direction of the base 100, the bag placement platform 102 is also arranged in the length direction of the base 100, and the load-end conveyor belt 101 and the bag placement platform 102 are arranged at intervals in a width direction of the base 100; the bag sorting mechanism includes a plurality of the SCARA 200 arranged at intervals in the length direction of the base 100, the SCARA 200 is fixedly connected to the base 100 and is located between the load-end conveyor belt 101 and the bag placement platform 102, the SCARA 200 is configured to transfer the to-be-inspected soft bag conveyed on the load-end conveyor belt 101 to the bag placement platform 102 and to adjust a placement orientation of the to-be-inspected soft bag, such that the top of the to-be-inspected soft bag is oriented the bag clamping inspection assembly 500, and the soft bag transfer assembly can grip the to-be-inspected soft bag on the bag placement platform 102 in a convenient manner.

In this example, the SCARA 200 exhibits smooth movement, which makes the sorting material process gentle, and avoids the formation of bubbles during the transfer of the to-be-inspected soft bag by the SCARA 200, such that the accuracy of inspection results of foreign matter is further improved. Moreover, the SCARA 200 is small in size and easy to install, the foundation of the SCARA 200 is deliberately and directly installed on the base 100, with no need to be installed onto the ground for fixation like a conventional robot. A pharmaceutical facility has very rigorous requirements for a ground and needs to ensure that the ground is flat, while the SCARA 200 does not need to be fixed on the ground, thereby avoiding damage to the ground. The bag loading mechanism is a load-end conveyor belt 101 arranged in a length direction of the base 100, the bag placement platform 102 is also arranged in the length direction of the base 100, and the load-end conveyor belt 101 and the bag placement platform 102 are arranged at intervals in a width direction of the base 100; the SCARA 200 is installed between the load-end conveyor belt 101 and the bag placement platform 102 to facilitate the gripping and placing of to-be-inspected soft bag from the load-end conveyor belt 101 onto the bag placement platform 102, and a plurality of the SCARA 200 are provided, such that a plurality of the to-be-inspected soft bags can be gripped and placed on the bag placement platform 102 at the same time. During this process, the SCARA 200 grips the to-be-inspected soft bag via a suction cup, and adjusts the placement orientation of the to-be-inspected soft bag to rotate the top of the to-be-inspected soft bag to a specified orientation, and then places the to-be-inspected soft bag onto the bag placement platform 102, such that the soft bag transfer assembly can grip the to-be-inspected soft bag on the bag placement platform 102 in a convenient manner.

Further, the bag sorting mechanism further includes a plurality of vision inspectors 201, the vision inspectors 201 are arranged at intervals in the length direction of the base 100 and correspond to the SCARAs 200, the vision inspectors are configured to acquire position data of the to-be-inspected soft bag moving on the load-end conveyor belt 101 and transmit the position data to the SCARAs 200, each of the SCARAs 200 are provided with an encoder for detecting a conveying speed of the load-end conveyor belt 101, and the SCARA 200 grips the to-be-inspected soft bag on the load-end conveyor belt 101 through the position data and places the to-be-inspected soft bag onto the bag placement platform 102.

In this example, the vision inspector 201 is fixed to one side of the load-end conveyor belt 101 of the base 100 via a bracket, and is arranged opposite to the SCARA 200, the vision inspector 201 is configured to transmit the position data of the to-be-inspected soft bag captured by the SCARA 200 on a corresponding side, and the vision inspector 201 includes a camera for photographing and a light source lamp for illumination, such that the light source lamp can clearly photograph the to-be-inspected soft bag to confirm the placement position and top orientation of the to-be-inspected soft bag, etc. The SCARA 200 is provided with the encoder for detecting the conveying speed of the load-end conveyor belt 101, and the encoder is connected to a driving shaft of the load-end conveyor belt 101, thereby avoiding the problem of interference between the encoder wheels and the to-be-inspected soft bag on the load-end conveyor belt 101 caused by the encoder wheels contacting the to-be-inspected soft bag of a traditional encoder; and in specific implementation, an encoder distributor is used as the encoder to divide data of one encoder into a plurality of portion for distribution to the plurality of the SCARAs 200, thereby reducing a number of the encoders.

With reference to FIGs. 2-3, the soft bag transfer assembly includes a support frame 300 fixedly connected to the base 100, a movable beam 302 slidingly connected to the support frame 300, and a gripping assembly 400 arranged on the movable beam 302 for gripping the top of the to-be-inspected soft bag and moving the to-be-inspected soft bag vertically in a height direction of the base 100.

In this example, the support frame 300 includes a plurality of support columns fixedly at intervals on the base 100, a connecting beam connecting the support columns in the length direction of the base 100 and translation rails 301 connecting the support columns in the width direction of the base 100. The movable beam 302 is slidably connected to the translation rails 301, the gripping assembly 400 is arranged on the movable beam 302, the gripping assembly 400 is configured to grip the top of the to-be-inspected soft bag and can move in the height direction of the base 100, and two gripping assemblies 400 are provided and evenly arranged in a length direction of the movable beam 302. In other examples, a number of the gripping assemblies 400 are adjusted according to a length of the supporting beam and a number of the bag clamping inspection assembly 500, facilitating simultaneous gripping of more to-be-inspected soft bags at one time and improving the inspection efficiency. In specific implementation, the movable beam 302 slides on the translation rails 301, such that the gripping assembly 400 approaches to the top of the to-be-inspected soft bag, and grips the top of the to-be-inspected soft bag, and after the to-be-inspected soft bag is lifted, the movable beam 302 slides on the translation rails 301 again to have the to-be-inspected soft bag moved above the bag clamping inspection assembly 500, the gripping assembly 400 lowers the to-be-inspected soft bag into the bag clamping inspection assembly 500, and then releases the to-be-inspected soft bag after it is clamped by the clamping inspection assembly 500, and the gripping assembly 400 will returns along the original movement path to grip the next to-be-inspected soft bag.

Further, the support frame 300 includes the translation rails 301 arranged in the width direction of the base 100, the movable beam 302 is installed on the translation rails 301, and the movable beam 302 is driven by a transmission assembly to slide on translation rails 301 in an adjustable manner; the transmission assembly includes a translation motor 303 fixed on the support frame 300, a translation lead screw 304 fixedly connected to an output shaft of the translation motor 303 and a screw nut 305 fixedly connected to the movable beam 302, the translation lead screw 304 is in threaded connection with the screw nut 305 and is rotationally connected to the support frame 300 after penetrating through the connecting beam, such that the movable beam 302 is driven by the translation motor 303 to slide on the translation rails 301 in the width direction of the base 100 in an adjustable manner.

In this example, the movable beam 302 is driven by a screw rod, and the translation motor 303 is a stepper motor capable of rotating both forward and backward; when the translation motor 303 rotates forward, the movable beam 302 is driven by the screw rod to move toward the bag clamping inspection assembly 500; and when the translation motor 303 rotates backward, the movable beam 302 is driven by the screw rod to move toward the bag placement platform 102. In order to ensure that the movable beam 302 can move stably on the translation rails 301, the transmission assembly is arranged at both ends of the movable beam 302 to drive the movements in the width direction of the base 100.

Further, the gripping assembly 400 includes a lifting assembly arranged on the movable beam 302, a support plate 401 connected to the lifting assembly, a flipping motor 402 arranged on the support plate 401, a flipping shaft 403 rotationally connected to the support plate 401, and a gripping member 404 fixed on the flipping shaft 403, where the lifting assembly is configured to drive the support plate 401 to move in the height direction of the base 100, the flipping motor 402 is configured to drive the flipping shaft 403 to rotate, such that the gripping member 404 can flip around an axis of the flipping shaft 403, and the gripping member 404 is configured to grip the top of the to-be-inspected soft bag.

In this example, in order to ensure that the support plate 401 can be lifted and lowered smoothly, an auxiliary movable assembly is further arranged on both sides of the lifting assembly; and the auxiliary movable assembly include sliding rails 405 fixedly connected to the movable beam 302 and sliding rods 406 slidably connected to the sliding rails 405, and the sliding rods 406 are fixedly connected to the support plate 401. The flipping motor 402 is fixed on the support plate 401, and an output end of the flipping motor is fixedly connected to a driving gear, and a driven gear meshing with the driving gear is connected to the flipping shaft 403, such that the flipping motor 402 can drive the flipping shaft 403 to rotate. In specific implementation, the flipping motor 402 drives the flipping shaft 403 to rotate, such that the gripping member 404 is flipped to a horizontal state, and the gripping member 404 is thus easy to grip the top of the to-be-inspected soft bag; and after being gripped by the gripping member 404, the to-be-inspected soft bag is lifted by the lifting assembly, and the flipping motor 402 drives the flipping shaft 403 to rotate at the same time, such that the gripping member 404 is flipped to a vertical state, and the to-be-inspected soft bag is vertically lifted, facilitating the placement of the to-be-inspected soft bag into the bag clamping inspection assembly 500.

Further, the lifting assembly includes a lifting motor 407 fixed on the movable beam 302, and a lifting lead screw 408 connected to an output shaft of the lifting motor 407, and the lifting lead screw 408 is fixedly connected to the support plate 401, such that the support plate 401 is driven to move in the height direction of the base 100 when the lifting motor 407 drives the lifting lead screw 408. In this example, the lifting assembly includes the lifting motor 407 and the lifting lead screw 408, and the lifting motor 407 drives the lifting lead screw 408 to move in the height direction of the base 100, thereby realizing the lifting and lowering of the support plate 401.

Further, a plurality of the gripping members 404 are arranged, the plurality of the gripping members 404 are arranged at intervals in a length of the flipping shaft 403, and the gripping members 404 can be pneumatic grippers or electric grippers.

In this example, one support plate 401 is rotationally connected to one flipping shaft 403, five gripping members 404 are arranged at intervals on the flipping shaft 403, and the gripping members 404 are the pneumatic grippers or electric grippers to grip the top of the to-be-inspected soft bag.

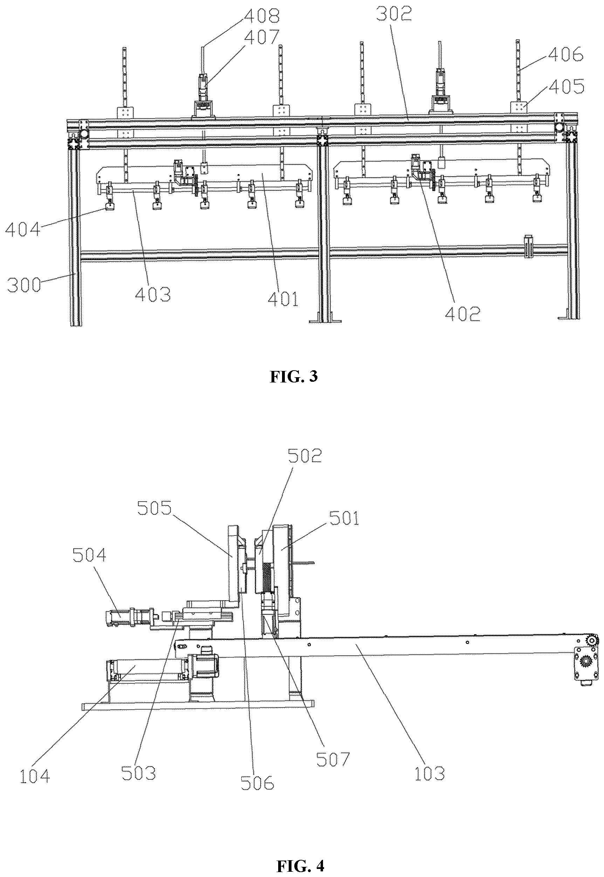

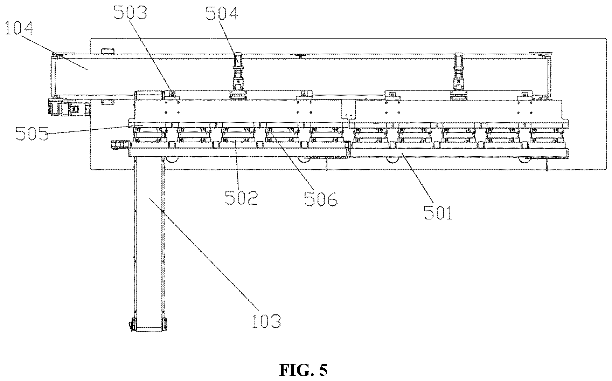

With reference to FIGs. 4 and 5, the bag clamping inspection assembly 500 includes a fixed clamping plate 501 fixed on the base 100, a movable clamping plate 505 slidingly connected to the base 100, and a drive assembly arranged on the base 100 for pushing the movable clamping plate to move in the width direction of the base 100; a plurality of first turntables 502 are rotationally connected to the fixed clamping plate 501, the first turntables 502 are arranged at intervals in a length direction of the fixed clamping plate 501 and driven by a rotating motor 507 arranged on the fixed clamping plate 501, and a plurality of second turntables 506 in one-to-one correspondence to the first turntables 502 are rotationally connected to the movable clamping plate 505; when the movable clamping plate 505 is driven by the drive assembly, the to-be-inspected soft bag is clamped between the first turntable 502 and the second turntable 506, the rotating motor 507 then drives the first turntables 502 to rotate, such that the to-be-inspected soft bag clamped between the first turntable 502 and the second turntable 506 is rotated, and the rotating to-be-inspected soft bag can be then inspected. In this example, the fixed clamping plate 501 is installed on the base 100 via a fixed support, the plurality of first turntables 502 are rotationally connected to the fixed clamping plate 501, the movable clamping plate 505 is slidably connected to the base 100 via the drive assembly, the base 100 is provided with guide rails 503 arranged in the width direction of the base 100, and the movable clamping plate 505 is slidably connected to the guide rails 503. Specifically, the drive assembly includes a driving motor 504, the driving motor 504 is a linear motor, an output end of the driving motor 504 is fixedly connected to the movable clamping plate 505 to drive the movable clamping plate 505 to slide on the guide rails 503, such that the movable clamping plate 505 is close to or away from the fixed clamping plate 501; and the plurality of second turntables 506 in one-to-one correspondence to the first turntables 502 are rotationally connected to the movable clamping plate 505, when the movable clamping plate 505 is close to the fixed clamping plate 501, the first turntable 502 and the second turntable 506 clamps the to-be-inspected soft bag, the rotating motor 507 then drives the first turntable 502 to rotate, and the to-be-inspected soft bag is then rotated for inspection. In another example, in order to ensure that the vision inspector 201 can better take pictures of the to-be-inspected soft bag on the load-end conveyor belt 101 to acquire the position data, a light source board can be arranged on the first turntable 502, and the light source board emits light toward one side of the vision inspector 201.

Further, the defective bag removal mechanism includes a conforming product conveyor belt 104 and a plurality of defective product conveyor belts 103, the defective product conveyor belts 103 are arranged below the first turntables 502 in the width direction of the base 100to receive the inspected soft bag, the plurality of defective product conveyor belts 103 are arranged at intervals in the length direction of the base 100 and are in one-to-one correspondence to the first turntables 502, the conforming product conveyor belt 104 is arranged on the base 100 and located below the defective product conveyor belts 103 to discharge the conforming soft bag for collection, the defective product conveyor belts 103 convey in a first direction to discharge the non-conforming soft bag for collection, and the defective product conveyor belts 103 convey in a second reaction to discharge the conforming soft bag onto the conforming product conveyor belt 104.

In this example, the plurality of defective product conveyor belts 103 are provided, and arranged in a way of corresponding to a number of the first turntables 502 for receiving the inspected soft bags and differentiating the soft bags for discharge. Specifically, the defective product conveyor belts 103 can change conveying directions according to an inspection structure, the defective product conveyor belts 103 are arranged in the width direction of the base 100, and the plurality of defective product conveyor belts 103 are arranged at intervals in the length direction of the base 100; the conforming product conveyor belt 104 is located below the defective product conveyor belts 103; when the defective product conveyor belts 103 obtain the collected non-conforming soft bags, the defective product conveyor belts 103 convey in the first direction to discharge the non-conforming soft bag for collection; and when the defective product conveyor belts 103 obtain the collected conforming soft bags, the defective product conveyor belts 103 convey in the second reaction to discharge the conforming soft bag onto the conforming product conveyor belt 104, and the conforming product conveyor belt 104 then conveys the conforming soft bags, such that the conforming soft bags are collected.

The above descriptions are only preferred embodiments of the present invention, and are not intended to limit the present invention. For those skilled in the art, the present invention may have various modifications and changes. Any modifications, equivalent substitutions, improvements, and the like within the spirit and principles of the present invention are intended to be included within the scope of protection of the present invention.

## Claims

1. An automatic inspection machine for foreign matters in a soft bag, **characterized by** comprising:
a base (100), the base (100) is provided with a bag loading mechanism for loading a to-be-inspected soft bag, a bag placement platform (102) for temporarily storing the to-be-inspected soft bag, and a defective bag removal mechanism for discharging an inspected soft bag, and the defective bag removal mechanism is configured to differentiate the inspected soft bag, and then discharge a conforming soft bag and a non-conforming soft bag through different routes;
a bag sorting mechanism arranged on the base (100), and the bag sorting mechanism is configured to grip the to-be-inspected soft bag conveyed by the bag loading mechanism and place the same on the bag placement platform (102); and
an inspection mechanism arranged on the base (100), the inspection mechanism comprises a soft bag transfer assembly and a bag clamping inspection assembly (500),
the soft bag transfer assembly is configured to transfer the to-be-inspected soft bag from the bag placement platform (102) to the bag clamping inspection assembly (500), and
the bag clamping inspection assembly (500) is configured to clamp and rotate the to-be-inspected soft bag for inspection, and then convey the inspected soft bag to the defective bag removal mechanism.

2. The automatic inspection machine for foreign matters in a soft bag according to claim 1, **characterized in that** the bag loading mechanism is a load-end conveyor belt (101) arranged in a length direction of the base (100), the bag placement platform (102) is also arranged in the length direction of the base (100), and the load-end conveyor belt (101) and the bag placement platform (102) are arranged at intervals in a width direction of the base (100); the bag sorting mechanism comprises a plurality of selective compliance articulated robot arms (SCARAs) (200) arranged at intervals in the length direction of the base (100), the SCARAs (200) are fixedly connected to the base (100) and are located between the load-end conveyor belt (101) and the bag placement platform (102), and the SCARA (200) is configured to transfer the to-be-inspected soft bag conveyed on the load-end conveyor belt (101) to the bag placement platform (102) and to adjust a placement orientation of the to-be-inspected soft bag, such that a top of the to-be-inspected soft bag is oriented the bag clamping inspection assembly (500), and the soft bag transfer assembly can grip the to-be-inspected soft bag on the bag placement platform (102) in a convenient manner.

3. The automatic inspection machine for foreign matters in a soft bag according to claim 2, **characterized in that** the bag sorting mechanism further comprises a plurality of vision inspectors (201), the vision inspectors (201) are arranged at intervals in the length direction of the base (100) and correspond to the SCARAs (200), the vision inspectors are configured to acquire position data of the to-be-inspected soft bag moving on the load-end conveyor belt (101) and transmit the position data to the SCARAs (200), each of the SCARAs (200) is provided with an encoder for detecting a conveying speed of the load-end conveyor belt (101), and the SCARAs (200) grip the to-be-inspected soft bag on the load-end conveyor belt (101) through the position data and place the to-be-inspected soft bag onto the bag placement platform (102).

4. The automatic inspection machine for foreign matters in a soft bag according to claim 2, **characterized in that** the soft bag transfer assembly comprises a support frame (300) fixedly connected to the base (100), a movable beam (302) slidingly connected to the support frame (300), and a gripping assembly (400) arranged on the movable beam (302) for gripping the top of the to-be-inspected soft bag and moving the to-be-inspected soft bag vertically in a height direction of the base (100).

5. The automatic inspection machine for foreign matters in a soft bag according to claim 4, **characterized in that** the support frame (300) comprises translation rails (301) arranged in the width direction of the base (100), the movable beam (302) is installed on the translation rails (301), and the movable beam (302) is driven by a transmission assembly to slide on translation rails (301) in an adjustable manner; and the transmission assembly comprises a translation motor (303) fixed on the support frame (300), a translation lead screw (304) fixedly connected to an output shaft of the translation motor (303) and a screw nut (305) fixedly connected to the movable beam (302), the translation lead screw (304) is in threaded connection with the screw nut (305), and the translation lead screw (304) is rotationally connected to the support frame (300) after penetrating the movable beam (302), such that the movable beam (302) is driven by the translation motor (303) to slide on the translation rails (301) in the width direction of the base (100) in an adjustable manner.

6. The automatic inspection machine for foreign matters in a soft bag according to claim 4, **characterized in that** the gripping assembly (400) comprises a lifting assembly arranged on the movable beam (302), a support plate (401) connected to the lifting assembly, a flipping motor (402) arranged on the support plate (401), a flipping shaft (403) rotationally connected to the support plate (401), and a gripping member (404) fixed on the flipping shaft (403); and the lifting assembly is configured to drive the support plate (401) to move in the height direction of the base (100), the flipping motor (402) is configured to drive the flipping shaft (403) to rotate, such that the gripping member (404) can flip around an axis of the flipping shaft (403), and the gripping member (404) is configured to grip the top of the to-be-inspected soft bag.

7. The automatic inspection machine for foreign matters in a soft bag according to claim 6, **characterized in that** the lifting assembly comprises a lifting motor (407) fixed on the movable beam (302), and a lifting lead screw (408) connected to an output shaft of the lifting motor (407), and the lifting lead screw (408) is fixedly connected to the support plate (401), such that the support plate (401) is driven to move in the height direction of the base (100) when the lifting motor (407) drives the lifting lead screw (408).

8. The automatic inspection machine for foreign matters in a soft bag according to claim 6, **characterized in that** a plurality of the gripping members (404) are arranged, the plurality of the gripping members (404) are arranged at intervals in a length of the flipping shaft (403), and the gripping members (404) can be pneumatic grippers or electric grippers.

9. The automatic inspection machine for foreign matters in a soft bag according to claim 1, **characterized in that** the bag clamping inspection assembly (500) comprises a fixed clamping plate (501) fixed on the base (100), a movable clamping plate (505) slidingly connected to the base (100), and a drive assembly arranged on the base (100) for pushing the movable clamping plate to move in the width direction of the base (100); a plurality of first turntables (502) are rotationally connected to the fixed clamping plate (501), the first turntables (502) are arranged at intervals in a length direction of the fixed clamping plate (501) and driven by a rotating motor (507) arranged on the fixed clamping plate (501), and a plurality of second turntables (506) in one-to-one correspondence to the first turntables (502) are rotationally connected to the movable clamping plate (505); when the movable clamping plate (505) is driven by the drive assembly, the to-be-inspected soft bag is clamped between the first turntable (502) and the second turntable (506), the rotating motor (507) then drives the first turntables (502) to rotate, such that the to-be-inspected soft bag clamped between the first turntable (502) and the second turntable (506) is rotated, and the rotating to-be-inspected soft bag can be then inspected.

10. The automatic inspection machine for foreign matters in a soft bag according to claim 9, **characterized in that** the defective bag removal mechanism comprises a conforming product conveyor belt (104) and a plurality of defective product conveyor belts (103), the defective product conveyor belts (103) are arranged below the first turntables (502) in the width direction of the base (100) to receive the inspected soft bag, the plurality of defective product conveyor belts (103) are arranged at intervals in one-to-one correspondence to the first turntables (502) in the length direction of the base (100), the conforming product conveyor belt (104) is arranged on the base (100) and located below the defective product conveyor belts (103) to discharge the conforming soft bag for collection, the defective product conveyor belts (103) convey in a first direction to discharge the non-conforming soft bag for collection, and the defective product conveyor belts (103) convey in a second reaction to discharge the conforming soft bag onto the conforming product conveyor belt (104).
